(19) Europäisches Patentamt

European Patent Office

Office européen des brevets

(11) EP 3 339 252 B1

## (12) EUROPEAN PATENT SPECIFICATION

(45) Date of publication and mention
of the grant of the patent:
**25.09.2019 Bulletin 2019/39**

(51) Int Cl.:
*C02F 1/72* (2006.01)          *B01F 5/06* (2006.01)
*C02F 1/76* (2006.01)          *C02F 1/78* (2006.01)
*B01F 3/04* (2006.01)          *B01F 3/08* (2006.01)

(21) Application number: **17202329.3**

(22) Date of filing: **17.11.2017**

(54) **A MULTI-CHAMBER SLOT-BAFFLE CONTACT TANK DESIGN**

MEHRKAMMER-KONTAKTTANKKONSTRUKTION MIT GESCHLITZTEM UMLENKBLECH

CONCEPTION DE RÉSERVOIR À CONTACT SLOT-DÉFLECTEUR MULTICHAMBRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2016 US 201662498260 P**

(43) Date of publication of application:
**27.06.2018 Bulletin 2018/26**

(73) Proprietor: **Eskisehir Osmangazi Üniversitesi
Eskisehir (TR)**

(72) Inventors:
• **Aral, Mustafa Mehmet
  Bartin (TR)**
• **Demirel, Ender
  Eskisehir (TR)**

(74) Representative: **Dericioglu Kurt, Ekin
Ankara Patent Bureau Limited
Kavaklidere Mahallesi
Bestekar Caddesi No: 10
06680 Cankaya, Ankara (TR)**

(56) References cited:
**US-A- 3 045 984**

• **B.A. WOLS ET AL: "Residence Time Distributions
in Ozone Contactors", OZONE: SCIENCE AND
ENGINEERING., vol. 30, no. 1, 14 February 2008
(2008-02-14), pages 49-57, XP055445685, US
ISSN: 0191-9512, DOI:
10.1080/01919510701759538**

Remarks:
The file contains technical information submitted after the application was filed and not included in this specification

## Description

### Field of the Invention

The present invention relates to multi-chamber contact tanks which are critical for the treatment of potable water in cities and municipalities. More specifically, in this invention a new slot-baffle design is proposed that improves mixing and reduces the flow through energy requirements of the contact tank. The proposed design is suitable for both chlorine and ozone disinfection process.

### Background of the Invention

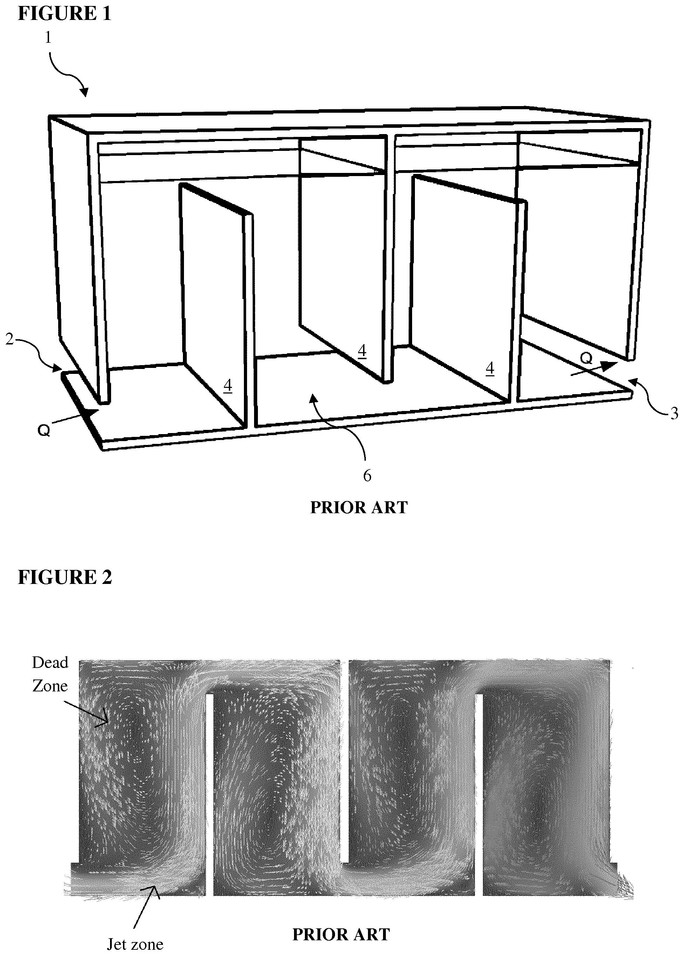

In recent years mixing efficiency of multi-chamber contact tanks in water treatment plants have gained significant attention. The classical multi-chamber contact tank design which is an important component of the potable water treatment plant is shown in Fig. 1. In water treatment plants water passes through several treatment processes first. During the last treatment stage, water is taken to a contact tank for the final disinfection process. In this contact tank the water is disinfected with ozone or chlorine before it is released for consumption. As shown in Fig. 1, a plurality of baffles are placed in the contact tank so that the water and the disinfectant (ozone or chlorine) contact in the tank is increased as much as and as long as possible. As shown in Fig. 2, due to the formation of high energy "jet flow zones," and large "dead flow zones" within the contact tank chambers, the classical design suffers from low mixing and high energy requirements to pass the flow through the contact tank system.

The flow structure for the classical contact tank shown in Fig. 2 is obtained from the Computational Fluid Dynamics (CFD) simulations performed on the contact tank shown in Fig. 1. As shown in Fig. 2, dead zones that develop in the chambers of the tank are not effective mixing zones and a large proportion of the disinfectant and the water are carried through the mixing tank in the jet flow zones. Therefore, a significant part of the disinfectant injected at the entrance leaves the contact tank through the jet flow zone without effective treatment. This event is identified as short-circuiting effect, which reduces the mixing efficiency of contact tank.

Mixing efficiency of contact tanks is critical in water treatment systems during disinfection. More importantly, an efficient contact tank mixing system is required for the ozonation process since ozone cannot dissolve in water as readily as chlorine. Energy requirements of the mixing process and the amount of ozone required during the disinfection process are proportional to the efficiency of mixing in the contact tank. Improving the mixing efficiency of the contact system reduces the energy consumption and volumetric ozone and chlorine use for disinfection, both of which are important. These requirements are more important for the feasibility of the ozone disinfection process since ozone production is more costly and energy intensive process.

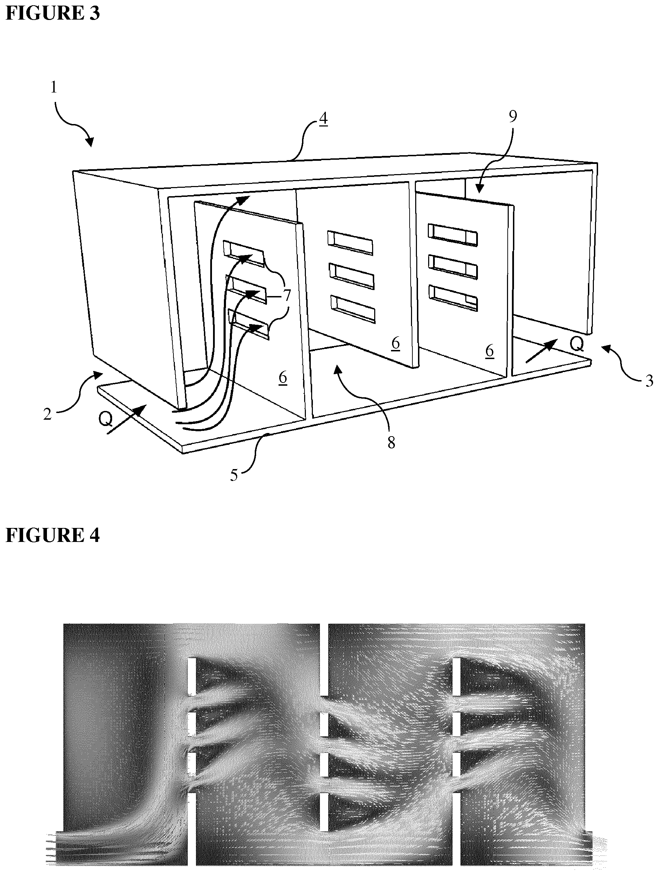

As described above, since the classical contact tank designs have low mixing efficiency, they use more disinfectant which increases disinfectant consumption in treatment plants. The energy requirements are more pronounced when ozone is used as disinfectant. Almost 90% of the total energy consumption in an ozone treatment plant is used for ozone generation. Since the energy cost of ozonation is very high, significant importance is given to R & D studies on contact tank designs to improve the efficiency of the contact tank and thus to reduce energy consumption. The energy required to pass the flow through the system is another component of energy consumption of these systems. It is shown that the proposed slot-baffle design also reduces this component of the energy used in the contact tank system. Typical design of the proposed slot-baffle configuration is shown in Fig. 3. The CFD solution of the flow system is shown in Fig. 4.

### References

[1] Demirel, E. and Aral, M. M. Unified Analysis of Multi-chamber Contact Tanks and Mixing Efficiency Based on Vorticity Field. Part I: Hydrodynamic Analysis. Water 8, 495-516, doi:10.3390/w8110495 (2016)

[2] Demirel, E. and Aral, M. M. Unified Analysis of Multi-chamber Contact Tanks and Mixing Efficiency Based on Vorticity Field. Part II: Transport Analysis. Water 8, 537-554, doi:10.3390/w8110537 (2016).

[3] Aral, M.M. and Demirel, E. Novel Slot-Baffle Design to Improve Mixing Efficiency and Reduce Cost of Disinfection in Drinking Water Treatment, Journal of Environmental Engineering ASCE, 143(9), 1-5 (2017).

[4] B.A. WOLS ET AL: "Residence Time Distributions in Ozone Contactors",OZONE: SCIENCE AND ENGINEERING., vol. 30, no. 1 (2008), pages 49-57 discloses a contact tank with a ceiling, a bottom and baffles arranged inside the tank.

[5] US 3 045 984 A discloses a fluid blender suitable for dispersing a chemical in a fluid comprising a cylindrical housing and perforated baffles arranged inside the housing.

## Summary of the Invention

The object of the present invention is to provide a multi-chambered contact tank comprised of baffle blocks with slots that improves the mixing efficiency of the contact tank and reduces the flow through energy requirements in the contact tank during the treatment of potable water while using chlorine and ozone.

In the present invention, the slots on the baffles enable the water to pass to the adjacent chambers as turbulent jets and this turns the low mixing efficiency dead zones to active mixing zones. In this process, the short-circuiting effects in the contact tank is reduced and the mixing efficiency of the tank is increased. The other advantage of the proposed slot-baffle design is that the slots reduce the friction losses between the fluid and the solid boundaries, which reduces the energy consumed by the pumps to transfer water through the contact tank. The proposed design is simple to implement on existing contact tank systems without expensive modifications and the proposed slot-baffle design geometry produces the reported efficiencies for a range of inflow discharges that are typically used in water treatment plants.

## Detailed Description of the Invention

A multi-chamber contact tank developed to fulfill the objective of the present invention is illustrated in the accompanying figures, in which:

Figure 1 is the schematic view of the classical contact tank used in the prior art.

Figure 2 is the flow structure of the classical contact tank shown in Figure 1.

Figure 3 is the schematic view of the multi-chambered contact tank.

Figure 4 is the flow structure of the novel contact tank shown in Figure 3.

Figure 5 shows tracer analysis results for the contact tank shown in Figure 1 and also the slot-baffle design shown in Figure 3,

a) normalized RTD plot, time is nondimensionalized using ($\theta$ = t/$\tau$), where $\tau$ is the theoretical mean residence time of the tank; tracer concentration is nondimensionalized using $E(\theta)$ = $C/(C_{init}T_{release}/\tau)$, where the tracer pulse at the inlet is $C_{init}$=1, and the injection period is $T_{release}$=2.5 s,

b) cumulative normalized RTD plot $F(\theta) = \int_0^\infty E(\theta)d\theta$

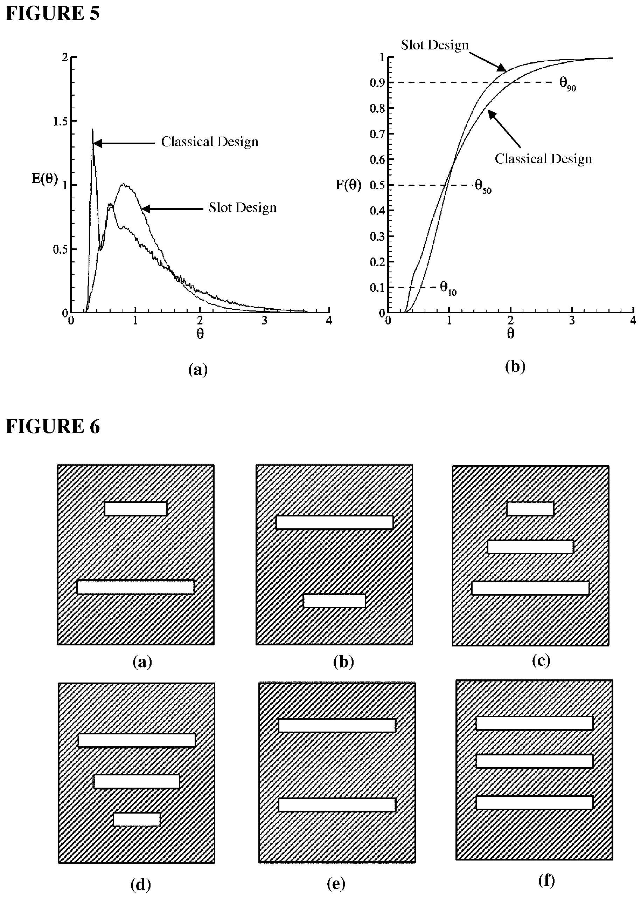

Figure 6 is the different slot configurations placed on the baffle horizontally.

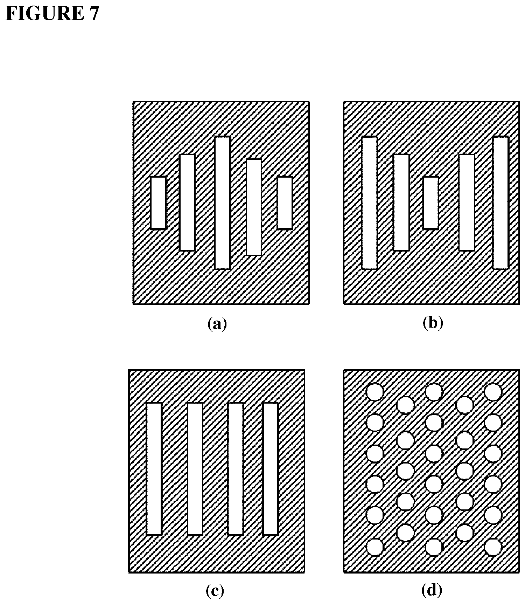

Figure 7 is the different slot configurations placed on the baffle vertically.

The components shown in the figures are each given reference numbers as follows:

1. Contact tank
2. Inlet
3. Outlet
4. Ceiling
5. Bottom
6. Baffle
7. Slot
8. Contact chamber
9. Gap
Q. Flow discharge

In the first embodiment of the present invention, the contact tank (1) for treatment of water using a disinfectant (such as ozone or chlorine) comprises; an inlet (2); an outlet (3); a plurality of baffles (6) arranged between the inlet (2) and the outlet (3); at least one slot (7) placed on each of the baffles (6); a plurality of contact chambers (8) each of which is formed between the adjacent baffles (6). The baffles (6) are placed on the ceiling (4) and the bottom (5) of the contact tank (1) and some of which extends from the ceiling (4) to the bottom (5) and the rest of which extends from the bottom (5) to the ceiling (4). The width of the baffles (6) are equal to the width between the two side walls (not shown in the figures) of the contact tank (1) and the height of the baffles (6) are shorter than the height between the ceiling (4) and the bottom (5) of the contact tank (1). Therefore, a plurality of gaps (9) is formed between each of the baffles (6) and the ceiling (4) or the bottom (5).

In the second embodiment of the present invention, the at least one slot (7) disclosed in the first embodiment given above and at least one other slot (7) are placed on the baffles (6) wherein the slots (7) are arranged one under the other and extend horizontally on the baffles (6).

In the third embodiment of the present invention, at least one slot (7) disclosed in the first embodiment and at least one other slot (7) are placed on the baffles (6) wherein the slots (7) are arranged side by side and extend vertically on the baffles (6).

In the second or third embodiment given above, the slots (7) may have the same size or at least one of the slots (7) has different size than the at least one other slot (7).

Fig. 3 shows the preferred embodiment of the contact tank (1) according to the present invention wherein the arrows in the figure indicate the direction of water flow. In the preferred embodiment, three rectangular slots (7) arranged one under the other extend horizontally on the baffles (6). The baffles (6) are placed on the ceiling (4) and the bottom (5) of the contact tank (1) and some of which extends from the ceiling (4) to the bottom (5) and the rest of which extends from the bottom (5) to the ceiling (4). The width of the baffles (6) are equal to the width between the two side walls (not shown in the figures) of the contact tank (1) and the height of the baffles (6) are shorter than the height between the ceiling (4) and the bottom (5) of the contact tank (1). Therefore, a plurality of gaps (9) is formed between each of the baffles (6) and the ceiling (4) or the bottom (5).

According to the present invention, the water to be disinfected is transferred from the inlet (2) at a flow discharge (Q) into the contact chambers (8) using at least one pump (not shown in figures), flows passes into the other contact chambers (8) by passing through the slots (7) and the gaps (9). The slots (7) on the baffles (6) enable the water to pass through the adjacent contact chambers (8) and cause the dead zones to turn into active mixing zones. Thus, the short-circuiting effects in the contact tank (1) are reduced and the mixing efficiency of the contact tank (1) is increased. The other advantage of the slots (7) is that the slots (7) reduce the friction losses between the fluid and the solid, thus the energy that the pumps consume to transfer water through the contact tank (1) is reduced as well. The proposed design is simple to implement on existing contact tank systems without expensive infrastructure modifications.

A tracer analysis is conducted and mixing indexes are computed for both classical design (without slots) shown in Fig. 1 and the proposed slot design shown in Fig. 3. The results of the tracer analysis are given in Fig. 5. The efficiency indexes corresponding to the classical and new design, which are obtained from the residence time distribution (RTD) curves and the improvements of the slot design are shown in the Table 1.

**Table 1.** Comparisons of efficiency indexes for classical and new design.

|  | $\theta_{10}$ | Mo | $\overline{\sigma}$ | $\Delta p/\rho$ $(m^2/s^2)$ |
|---|---|---|---|---|
| Classical design | 0.369 | 5.493 | 0.369 | 9.45 |
| Slot design | 0.532 | 3.192 | 0.201 | 5.41 |
| Improvement (%) | 44.17 | 41.89 | 45.53 | 42.75 |

Based on the comparisons of the baffle factor ($\theta_{10}$), *Morrill* index (Mo), dispersion index $\overline{\sigma}$ and the pressure difference between the classical design and slot design indicate that the proposed slot design concept significantly reduces the short-circuiting, improves the mixing and reduces the energy requirements for the flow through system in the contact tank (1). According to the tracer result, the contact tank (1) shown in Fig. 3 has following advantages over the classical design;

    i) Short-circuiting effects were reduced by 44.17% according to the baffle factor.
    ii) Mixing efficiency was increased by 41.89% according to the *Morrill* index (Mo) and 45.53% according to the dispersion index ($\overline{\sigma}$). Thus, treatment process can be performed using fewer disinfectants.
    iii) Flow through energy requirement is reduced by %42.75. Thus, the energy that the pumps consume for transferring water in the contact tank (1) is reduced.

In another embodiment of the present invention (not shown in the figures), the baffles (6) disclosed in anyone of the embodiments in the present invention, are placed on the two opposing side walls of the contact tank (1) instead of the ceiling (4) and bottom (5). In this case, width of the baffles (6) is less than the width between the opposing side walls of the contact tank (1), and the height of the baffles (6) are equal the height between the ceiling (4) and bottom (5) of the contact tank (1). Therefore, a plurality of gaps (9) is formed between each of the baffles (6) and the side walls.

In another embodiment, at least one of the slots (7) disclosed in anyone of the embodiments in the present invention, has different geometrical shape (such as square, circular, elliptical, triangular, pentagon, square, hexagon...) and different size. Other types of slot designs which have different geometric properties, such as length, height, and locations of the slots (7) are shown in the Fig. 6 and Fig. 7.

Fig. 6a-6f shows alternative slot configurations where the slots (7) are placed on the baffle (6) horizontally. In Fig. 6a, two rectangular slots (7) extending horizontally are placed on the baffle (6) one under the other wherein the slot (7) on the bottom is longer than the other slot (7) on the top. In Fig. 6b, two rectangular slots (7) extending horizontally are placed on the baffle (6) one under the other wherein the slot (7) on the top is longer than the other slot (7) on the bottom. In Fig. 6c, three rectangular slots (7) extending horizontally are placed on the baffle (6) one under the other wherein the slot (7) on the middle is longer than the slot (7) on the top and shorter than the slot (7) on the bottom. In Fig. 6d, three rectangular slots (7) extending horizontally are placed on the baffle (6) one under the other wherein the slot (7) on the middle is shorter than the slot (7) on the top and longer than the slot (7) on the bottom. In Fig. 6e, two rectangular slots (7) extending horizontally are placed on the baffle (6) one under the other wherein the both slots (7) are the same size. In Fig. 6f, three rectangular slots (7) extending horizontally are placed on the baffle (6) one under the other wherein the all slots (7) are the same size.

The other slot (7) configurations are depicted in Fig. 7a-7d where the slots (7) are placed on the baffle (6) vertically. In Fig. 7a, five rectangular slots (7) extending vertically are placed on the baffle (6) side by side wherein the slot (7) on the middle is longer than the other slots (7) and the slots (7) adjacent to the slot (7) on the middle are longer than the other slots (7). In Fig. 7b, five rectangular slots (7) extending vertically are placed on the baffle (6) side by side wherein the slot (7) on the middle is shorter than the other slots (7) and the slots (7) adjacent to the middle slot (7) are shorter than the other slots (7). In Fig. 7c, four rectangular slots (7) extending vertically are placed on the baffle (6) side by side wherein the all slots (7) are the same size. In Fig. 7d, a plurality of circular slots (7) arranged vertically on the baffle (6).

Another tracer analysis is conducted and mixing indexes are computed for both classical (without slots) and the proposed different slot designs given in Fig. 6 and Fig. 7, which are placed horizontally and vertically on the baffle (6). The most efficient results obtained from different slot configurations are compared with the classical design in Table 2. The pressure difference between the inlet (2) and outlet (3) of the contact tank (1) is also computed as shown in the last column of Table 2.

**Table 2.** Comparisons of efficiency indexes and pressure gradients for classical and new design.

|  | $\theta_{10}$ | Mo | $\overline{\sigma}$ | AD | $\Delta p / \rho$ (m$^2$/s$^2$) |
|---|---|---|---|---|---|
| Classical design | 0.380 | 5.713 | 0.377 | 1.651 | 10.500 |
| Slot design | 0.595 | 2.797 | 0.201 | 1.182 | 5.156 |
| Improvement (%) | 56.57 | 51.05 | 46.76 | 28.39 | 50.89 |

Based on the comparisons of the $\theta_{10}$ (dimensionless time required for 10% of the chemical concentration to be observed at the outlet (3) of the contactor), the *Morrill* index (Mo), dispersion index $(\overline{\sigma})$, *Aral-Demirel* Index (AD) and the pressure difference between the classical design and slot design indicate that the proposed slot design concept significantly improves mixing and reduces the energy requirements for the flow through system in the contact tank (1). In particular the following improvements are recorded using Computational Fluid Dynamics techniques:

- Short-circuiting effects were reduced by 57%.
- Mixing efficiency was increased by 51.05% according to the Mo index.
- Mixing efficiency was increased by 47% according to the dispersion index $(\overline{\sigma})$.
- Mixing efficiency was increased by 28% according to the AD index.
- Flow through energy requirement is reduced by 51%.

**Claims**

1. A contact tank (1) for the treatment of water using a disinfectant, the contact tank (1) comprising an inlet (2); an outlet (3); a ceiling (4); a bottom (5); a plurality of baffles (6) which are arranged between the inlet (2) and the outlet (3) and placed on the ceiling (4) and the bottom (5) of the contact tank (1) and some of which extends from the ceiling (4) to the bottom (5) and the rest of which extends from the bottom (5) to the ceiling (4); a plurality of contact chambers (8) each of which is formed between the adjacent baffles (6); a plurality of gaps (9) formed between each of the baffles (6) and the ceiling (4) or the bottom (5) **and characterized by** at least one slot (7) placed on each of the baffles (6).

2. The contact tank (1) according to claim 1 **wherein** the at least one slot (7) and at least one other slot (7) are placed on the baffles (6).

3. The contact tank (1) according to claim 2 **wherein** the slots (7) are arranged one under the other.

**4.** The contact tank (1) according to claim 3 **wherein** the slots (7) extend horizontally on the baffles (6).

**5.** The contact tank (1) according to claim 2 **wherein** the slots (7) are arranged side by side.

**6.** The contact tank (1) according to claim 5 **wherein** the slots (7) extend vertically on the baffles (6).

**7.** The contact tank (1) according to claim 3 or 5 **wherein** the slots (7) have the same size.

**8.** The contact tank (1) according to claim 3 or 5 **wherein** at least one of the slots (7) has different size.

**Patentansprüche**

**1.** Kontakttank (1) zur Behandlung von Wasser unter Verwendung eines Desinfektionsmittels, der Kontakttank (1) **umfasst** einen Einlass (2); einen Auslass (3); eine Decke (4) einen Boden (5); eine Vielzahl von Leitblechen (6), die zwischen dem Einlass (2) und dem Auslass (3) angeordnet und an der Decke (4) und dem Boden (5) des Kontakttanks (1) platziert sind und von denen sich einige von der Decke (4) bis zum Boden (5) und der Rest vom Boden (5) bis zur Decke (4) erstreckt; eine Vielzahl von Kontaktkammern (8), von denen jede zwischen den benachbarten Leitblechen (6) gebildet ist; eine Vielzahl von Spalten (9), die zwischen jedem einzelnen der alten Leitbleche (6) und der Decke (4) oder dem Boden (5) gebildet sind. **und gekennzeichnet durch** mindestens einen Schlitz (7), der auf jeder der Leitbleche (6) platziert ist

**2.** Kontakttank (1) nach Anspruch 1, **wobei** der mindestens eine Schlitz (7) und mindestens ein weiterer Schlitz (7) auf den Leitblechen (6) platziert sind.

**3.** Kontakttank (1) nach Anspruch 2, **wobei** die Schlitze (7) untereinander angeordnet sind.

**4.** Kontakttank (1) nach Anspruch 3, **wobei** sich die Schlitze (7) horizontal auf den Leitblechen (6) erstrecken.

**5.** Kontakttank (1) nach Anspruch 2, **wobei** die Schlitze (7) Seite an Seite angeordnet sind.

**6.** Kontakttank (1) nach Anspruch 5, **wobei** sich die Schlitze (7) vertikal auf den Leitblechen (6) erstrecken.

**7.** Kontakttank (1) nach Anspruch 3 oder 5, **wobei** die Schlitze (7) die gleiche Größe aufweisen.

**8.** Kontakttank (1) nach Anspruch 3 oder 5, **wobei** mindestens einer der Schlitze (7) eine unterschiedliche Größe aufweist.

**Revendications**

**1.** Réservoir de contact (1) pour le traitement de l'eau à l'aide d'un désinfectant, le réservoir de contact (1) **comprenant** une entrée (2) ; une sortie (3) ; un plafond (4) ; un fond (5) ; une pluralité de chicanes (6) qui sont disposées entre l'entrée (2) et la sortie (3) et placées sur le plafond (4) et le fond (5) du réservoir de contact (1) et dont certaines s'étendent du plafond (4) au fond (5) et dont le reste s'étend du fond (5) au plafond (4) ; une pluralité de chambres de contact (8) dont chacune est formée entre les chicanes adjacentes (6) ; une pluralité d'espaces (9) formés entre chacun des chicanes (6) et le plafond (4) ou le fond (5) **et caractérisé par** au moins une fente (7) placée sur chacun des chicanes (6).

**2.** Réservoir de contact (1) selon la revendication 1, **dans lequel** au moins une fente (7) et au moins une autre fente (7) sont placées sur les chicanes (6).

**3.** Réservoir de contact (1) selon la revendication 2, **dans lequel** les fentes (7) sont disposées l'une sous l'autre.

**4.** Réservoir de contact (1) selon la revendication 3, **dans lequel** les fentes (7) s'étendent horizontalement sur les chicanes (6).

**5.** Réservoir de contact (1) selon la revendication 2, **dans lequel** les fentes (7) sont disposées côte à côte.

**6.** Réservoir de contact (1) selon la revendication 5, **dans lequel** les fentes (7) s'étendent verticalement sur les chicanes (6).

**7.** Réservoir de contact (1) selon la revendication 3 ou 5, **dans lequel** les fentes (7) ont la même taille.

**8.** Réservoir de contact (1) selon la revendication 3 ou 5, **dans lequel** au moins l'un des fentes (7) présente des dimensions différentes.

## FIGURE 1

PRIOR ART

## FIGURE 2

Dead Zone

Jet zone

PRIOR ART

## FIGURE 3

## FIGURE 4

**FIGURE 5**

(a)

(b)

**FIGURE 6**

(a)　　　　　(b)　　　　　(c)

(d)　　　　　(e)　　　　　(f)

**FIGURE 7**

(a)

(b)

(c)

(d)

**EP 3 339 252 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3045984 A

### Non-patent literature cited in the description

- **DEMIREL, E. ; ARAL, M. M.** Unified Analysis of Multi-chamber Contact Tanks and Mixing Efficiency Based on Vorticity Field. *Hydrodynamic Analysis,* 2016, vol. 8, 495-516
- **DEMIREL, E. ; ARAL, M. M.** Unified Analysis of Multi-chamber Contact Tanks and Mixing Efficiency Based on Vorticity Field. *Transport Analysis,* 2016, vol. 8, 537-554
- **ARAL, M.M. ; DEMIREL, E.** Novel Slot-Baffle Design to Improve Mixing Efficiency and Reduce Cost of Disinfection in Drinking Water Treatment. *Journal of Environmental Engineering ASCE,* 2017, vol. 143 (9), 1-5
- **B.A. WOLS et al.** Residence Time Distributions in Ozone Contactors. *OZONE: SCIENCE AND ENGINEERING,* 2008, vol. 30 (1), 49-57